# FASCICULE DE BREVET EUROPEEN

(11) **EP 0 736 470 B1**
(45) Date de publication et mention de la délivrance du brevet: **07.01.1998**
(21) Numéro de dépôt: 96870045.0
(22) Date de dépôt: 05.04.1996
(51) Int. Cl.: B65G 63/06, B65G 69/18, B65G 1/04, B65D 88/32

(54) **Installation de transport de conteneurs pour produits s'écoulant par gravité**
Uebergabeanlage von Behältern für durch Schwerkraft fliessende Produkte
Transfer installation of containers for products flowing by gravity

(30) Priorité: 07.04.1995 FR 9504159
(43) Date de publication de la demande: 09.10.1996
(73) Titulaire: ELVECO msj S.A., B-1200 Bruxelles (BE)
(72) Inventeur: Lhoest, Willy, 1200 Bruxelles (BE)
(74) Mandataire: Bairiot-Delcoux, Mariette

(56) Documents cités:
- EP-A- 0 133 472
- EP-A- 0 367 930
- EP-A- 0 384 826
- EP-A- 0 619 254
- DE-A- 3 933 314
- DE-U- 9 208 819
- FR-A- 2 348 871
- FR-A- 2 696 725

## Description

La présente invention concerne des installations de transport automatique de conteneurs pour produits s'écoulant par gravité, destinées, en particulier, à l'industrie pharmaceutique ainsi qu'un dispositif apte à porter un conteneur et apte à se déplacer de manière autonome.

On connait des usines pharmaceutiques de type horizontal, dans lesquelles les divers équipements et locaux réservés au processus de fabrication sont essentiellement disposés sur un seul et même niveau. Dans de telles usines, les matières premières et les produits aux divers stades de leur élaboration, sont transportés dans des conteneurs de type quelconque (fûts, sacs, boîtes,...) posés en général sur palettes et déplacés par des engins de type élévateur à fourches, conduits par un opérateur.

Aujourd'hui, de tels concepts d'usines sont considérés comme dépassés car ils ne permettent plus de satisfaire aux exigences modernes de séparation des divers circuits de personnes et des flux de matières, d'absence de contamination croisée et de protection des opérateurs.

Il existe aussi des types d'usines plus récents, que la littérature professionnelle dénomme couramment les "Lhoest Type Plants"_{,} disposés en plusieurs étages. Dans ces usines, un ou plusieurs étages sont réservés à la production ou au traitement de produits pharmaceutiques dans lesquels des exigences de propreté très strictes, voire de stérilité, sont respectées. Ces étages de production sont pris en sandwich entre des étages dits "techniques" qui servent non seulement à la distribution des fluides et des énergies, mais surtout au transport et au stockage des matières premières et des produits en cours de fabrication. Dans ce cas, lesdits matières et produits ci-dessus sont enfermés de façon étanche, dans des conteneurs standardisés, spécialement conçus à cette fin et qui permettent d'alimenter les appareils de production, en utilisant les forces de gravité, grâce à des stations d'alimentation spécialement conçues et situées dans le plafond. De façon semblable, les produits élaborés par les appareils de production s'écoulent par gravité, à travers des stations de réception situées dans le plancher, dans des conteneurs standardisés situés à l'étage inférieur. Ces concepts d'usines s'appliquent aussi bien à la fabrication de formes pharmaceutiques en vrac (tablettes, capsules, granules, comprimés enrobés, pellets, sirops, gouttes, pommades,...) qu'à leur conditionnement et à leur emballage.

Ces usines multi-étages répondent aux exigences les plus strictes. Elles sont en général automatisées, et pilotées par ordinateur. Dans de telles usines, les produits dans leurs conteneurs étanches standardisés, sont déplacés à l'aide d'engins de manutention automatiques, en particulier des véhicules guidés automatiquement, appelés ci-dessous A.G.V. (de l'anglais "Automated Guided Vehicle") couplés parfois à des engins de manutention appelés transtockeurs ou stackers (de l'anglais "stacker cranes").

En dépit de nombreux avantages, les A.G.V. présentent néanmoins d'importants inconvénients: ils sont chers et lourds (1 à 3 tonnes à vide, 2 à 5 tonnes en charge); ils ne peuvent se déplacer que sur sols spécialement conçus, parfaitement plans, doués d'une conductivité électrique et d'une rugosité bien précises. Leur technologie est complexe et délicate. Leur circulation exige des corridors et espaces de manoeuvre non négligeables. Enfin, de par leur masse, ils conduisent à une structure de dalles et de bâtiments plus lourds. Par conséquent, dans l'ensemble, leur utilisation est relativement coûteuse.

Le nouveau système de manutention faisant l'objet de la présente invention est à la base d'un nouveau concept d'usines. Il permet de conserver tous les avantages techniques, financiers, légaux,... qu'apportent les usines multi-étages ci-dessus, mais, en outre, il permet de simplifier les concepts, d'abaisser les coûts de construction (15-25%), d'obtenir des cycles de production plus courts et d'éliminer les inconvénients liés à l'utilisation des A.G.V.

Il est connu du brevet européen EP-A-0 619 254 du même demandeur, un dispositif de transfert de produits s'écoulant par gravité, de conteneurs ou conduits supérieurs, vers des conteneurs ou conduits inférieurs, par l'intermédiaire d'une station de déchargement. Le dispositif permet de réaliser, à tout moment, et en particulier durant les phases de connexion du conteneur à la station de déchargement et durant les phases de transfert du produit, une étanchéité aussi complète que possible. Tout danger de pollution, tant de l'atmosphère ambiante que du produit transféré, est ainsi écarté.

Ce dispositif peut, en particulier, être appliqué à l'industrie pharmaceutique.

Il est également connu, suivant un système conventionnel, un magasin de stockage automatique comportant un couloir disposé entre deux structures métalliques (ou "racks"). Ces structures métalliques sont divisées en cases (ou "logettes"), destinées à recevoir des produits qui sont rangés, dans la plupart des cas, sur des palettes. Dans le couloir, un moyen de levage peut se déplacer dans le plan horizontal, sur des rails. Ce moyen de levage, appelé "transtockeur", comporte un mât dont la hauteur équivaut approximativement à la hauteur du bâtiment. Le transtockeur est muni d'une nacelle pouvant se déplacer dans le plan vertical. Cette nacelle, comportant généralement des fourches télescopiques, est destinée à introduire dans les racks, des palettes venant de l'extérieur, ou à aller chercher une palette dans une logette pour la changer de place, la sortir ou pour la mettre sur un convoyeur pour la transporter vers un lieu de traitement.

Dans certains cas, la structure métallique a une profondeur égale à la dimension de plusieurs palettes. Dans ce cas, la nacelle n'est pas munie de fourches, mais comporte un satellite communément dénommé "furet", un petit chariot de faible hauteur (généralement vingt centimètres environ), guidé par deux rails. Celui-ci s'introduit sous la palette, dans les logettes de la structure métallique, soulève la palette désirée et l'emporte. Un tel furet est généralement alimenté électriquement à l'aide d'un câble qui reste lié à la nacelle et donc au moyen de levage. Il prend donc sa puissance sur le transtockeur. Ceci veut dire que, pendant que le furet se trouve dans une logette de la structure métallique, le transtockeur doit l'attendre, ce qui constitue une perte de temps, donc d'efficacité. Par ailleurs ce système est limité à la manutention d'objets stockés sur palettes.

On connait également, de la demande de brevet EP-A-0 133 472, un dispositif pour l'emmagasinage vertical de conteneurs, comprenant, à chaque étage d'un bâtiment, un couloir central de chaque côté duquel se trouve une pluralité de compartiments de stockage ou d'entreposage aptes à recevoir des conteneurs. Les couloirs sont munis de chemins de roulement horizontaux équipés de chariots qui permettent de déplacer les conteneurs le long du couloir, et de les placer dans les compartiments ou de les en retirer. Au moins une extrémité du couloir est pourvue d'un moyen de levage. Celui-ci comporte ses propres moyens de préhension des conteneurs.

Ce dispositif est apte à stocker des conteneurs, mais pas à les transporter vers des stations de transfert du produit qu'ils contiennent, où, dans ce cas, le conteneur doit être connecté de manière extrêmement précise à la station de transfert. Cette connexion est d'autant plus importante lorsque le produit à transférer est toxique ou est un produit pharmaceutique et qu'il est alors primordial d'éviter toute contamination de l'atmosphère par le produit et d'éviter toute contamination du produit lui-même. Le dispositif décrit dans la demande de brevet EP-A-0 133 472 n'est pas muni de moyens de positionnement du conteneur. Ce dispositif ne suppose donc aucun transfert de produit s'écoulant par gravité, vers des locaux de traitement.

Le document EP-A-0 367 930 décrit une installation pour rayonnages comportant un cadre porteur déplaçable le long d'un axe horizontal, muni d'un dispositif de chargement et de prélèvement mobile selon un axe vertical Cette installation est destinée au stockage et au prélèvement de palettes dans des casiers de rayonnage tout en maintenant un espace inférieur libre pour la circulation des marchandises à entreposer dans cet espace inférieur. Cette installation ne permet de déplacer des palettes que dans un seal plan vertical et non dans un espace tridimensionnel. Cette installation n'est pas adaptée à l'usine multi-étages comportant des zones techniques et des locaux de production telle que décrite ci-dessus.

Le document FR-A-2.348.871 décrit un dispositif de déchargement, de stockage sélectif et de distribution de produits. Ce dispositif est destiné à des produits généralement très poussiéreux transportés en circuit ouvert dans une enceinte et non dans des conteneurs hermétiques.

Le document FR-A-2.696.725 décrit une installation sans contamination de transfert de produits pulvérulents entre deux enceintes physiquement séparées. Aucun dispositif n'est décrit ou envisagé pour amener les conteneurs sur l'installation de transfert et pour les déplacer d'une installation de transfert à une autre c'est-à-dire au sein d'un espace tridimensionnel constitué par l'usine de production.

La présente invention a pour but de fournir un nouveau concept d'usine automatique, basé sur un nouveau moyen de transport et de transfert de conteneurs pour produits s'écoulant par gravité.

En particulier, la présente invention a pour but de fournir une installation de transport de conteneurs dans un complexe industriel disposé en plusieurs étages.

La présente invention a encore pour but de fournir une telle installation de transport qui puisse être adaptée notamment aux dispositifs de transfert de produits s'écoulant par gravité décrits dans le brevet européen n° 0 619 254.

La présente invention a pour objet une installation de transfert de produits s'écoulant par gravité, intégrée à une usine de production à plusieurs étages comportant d'une part, des locaux de traitement et, d'autre part, des zones techniques (notamment une usine pharmaceutique, alimentaire ou toute usine apparentée), ladite installation comportant : - des conteneurs hermétiques pourvus d'au moins un orifice obturable,
- des stations de transfert, sans contamination, des produits s'écoulant par gravite, à partir d'un conteneur vers un local de traitement (station d'alimentation) et/ou à partir d'un local de traitement vers un conteneur (station de réception, à travers un plancher parfaitement étanche,
- au moins un organe satellite comportant une cage de forme parallélépipédique, ouverte à ses parties inférieure et supérieure et au moins à un des ses côtés latéraux, ledit organe satellite étant apte à porter un conteneur et apte à lever et descendre ledit conteneur, grâce à un dispositif de translation verticale propre à cet organe satellite, de manière à permettre son accouplement aux dites stations, ledit organe satellite étant apte à être déplacé suivant au moins un axe horizontal (Y) et un axe vertical (X), par des moyens de manutention, ledit organe satellite comportant des moyens de déplacement propres aptes à coopérer avec des moyens de guidage, de manière à permettre à l'organe satellite de se déplacer le long d'au moins un axe horizontal (Z), de manière autonome par rapport aux moyens de manutention,
- lesdits moyens de guidage étant aptes à guider l'organe satellite entre les moyens de manutention et lesdites stations, l'ensemble des moyens de manutention, des moyens de guidage, du ou des organes satellites et des conteneurs étant disposé dans les zones techniques,
- des moyens de repérage et de positionnement des conteneurs, et
- un système de gestion apte à coordonner l'ensemble des mouvements des moyens de manutention, du ou des organes satellites, et des conteneurs.

Ledit système d'accouplement permet de réaliser un transfert des produits, sans poussière ni contamination, ni de l'atmosphère, ni des produits, ce transfert étant réalisé entre des zones dites techniques et des locaux de traitement, dits propres, séparés par des parois étanches.

Suivant un premier mode de réalisation de l'invention, lesdits moyens de manutention comportent au moins un engin de levage comportant une nacelle apte à se déplacer verticalement, le ou les moyens de levage étant aptes à se déplacer le long d'un organe de guidage. Avantageusement, ce moyen de guidage comporte un rail inférieur et éventuellement un rail supérieur.

Suivant un autre mode de réalisation, lesdits moyens de manutention comportent au moins un engin de levage fixe et comportent plusieurs moyens de transport horizontal, disposés à différents étages. D'une manière préférée, le ou les engins de levage sont disposés à une extrémité du couloir ou aux deux extrémités.

D'une manière particulière, l'organe satellite comporte une cage de forme parallélépipédique comportant au minimum deux parois sensiblement rectangulaires.

D'une manière avantageuse, chaque paroi de la cage consiste en un ensemble de profilés formant un cadre.

En particulier, l'organe satellite comporte des moyens de préhension des conteneurs et les conteneurs comportent des moyens de suspension aptes à coopérer avec lesdits moyens de préhension.

D'une manière avantageuse, le dispositif de translation verticale de l'organe satellite comporte au moins un châssis coulissant le long de vis sans fin.

Suivant un mode d'exécution préféré, l'organe satellite comporte des roues aptes à être guidées par au moins un rail et d'une manière encore préférée par deux rails parallèles.

Avantageusement, certaines des stations de transfert des produits sont, soit des stations d'alimentation, situées dans le plafond des locaux de traitement des produits, par l'intermédiaire desquelles le produit contenu dans le conteneur est transféré, du conteneur, vers un local de traitement, soit des stations de réception, situées dans le plancher des locaux de traitement des produits, par l'intermédiaire desquelles le produit est transféré d'un local de traitement vers le conteneur.

La ou les stations(s) de réception comporte(nt), de préférence, des dispositifs d'accrochage aptes à coopérer avec des dispositifs de suspension du conteneur, afin de maintenir ce dernier en position sous la station de réception.

L'installation selon l'invention comporte, avantageusement, plusieurs stations de réception et plusieurs stations d'alimentation.

Dans le cas d'un local de pesée, la station de réception doit être désolidarisée pour ne pas influer sur l'opération de pesée.

D'une manière particulière, l'installation comporte aussi des zones de parking, où sont placés un ou plusieurs conteneurs en attente.

Suivant une réalisation avantageuse de l'invention, les moyens de manutention comportent des moyens pour transporter l'organe satellite, tels un double rail de roulement apte à coopérer avec l'organe satellite ou des fourches.

Avantageusement, outre l'organe satellite, les moyens de manutention sont également aptes à transporter, simultanément ou non, des palettes.

Suivant un mode particulier de réalisation de l'invention, le système comporte des détecteurs de positionnement des conteneurs par rapport aux stations.

Suivant un mode de réalisation de l'invention, certains des conteneurs comportent un orifice supérieur apte à s'engager dans une station de réception et un orifice inférieur apte à s'engager dans une station d'alimentation.

Suivant un autre mode de réalisation de l'invention, certains des conteneurs sont réversibles. Ils comportent alors un orifice unique apte à s'engager dans une station de réception ou dans une station d'alimentation. Bien entendu, l'installation selon l'invention peut comporter, à la fois des conteneurs à deux orifices et des conteneurs réversibles, à un seul orifice.

Le dispositif de translation verticale de l'organe satellite comporte, en particulier, des vis sans fin mises en mouvement à l'aide d'un moteur et d'un ensemble de mécanismes d'entraînement, et un châssis muni des dits moyens de préhension du conteneur et apte à se déplacer verticalement le long des vis sans fin. Le déplacement vertical du châssis est, avantageusement, guidé par des coulisses.

L'organe satellite comporte, avantageusement, des roues mises en mouvement par un système d'entraînement et un système d'actionnement porté à bord du dispositif lui-même.

Suivant un mode particulier de réalisation de l'invention, l'organe satellite comporte deux jeux de roues lui permettant des déplacements suivant deux axes horizontaux différents.

Suivant un mode particulier de réalisation de l'invention, l'organe satellite est alimenté par batterie embarquée à bord du dispositif lui-même.

Suivant un autre mode de réalisation, l'organe satellite, est alimenté électriquement à partir de frotteurs glissant le long d'un rail d'alimentation électrique.

Divers caractéristiques et avantages de l'invention ressortiront de la description qui va suivre, d'une forme possible de réalisation, référence étant faite aux dessins annexés, dans lesquels :
la Fig. 1 est une vue générale schématique d'une coupe suivant un plan vertical d'une installation selon l'invention;
la Fig. 2 est une vue suivant le même plan vertical d'un organe satellite, portant un conteneur, guidé par des rails latéraux;
la Fig. 3 est une vue de derrière analogue à celle de la Fig. 2;
la Fig. 4 est une coupe suivant la ligne IV-IV de la Fig. 2;
les Figs. 5 et 6 sont des vues de détails du moyen de translation verticale;
la Fig. 7 est une vue détaillée d'un moyen de préhension d'un conteneur;
la Fig. 8 montre une variante de réalisation d'un moyen de préhension d'un conteneur et d'un moyen d'appui du conteneur sur l'organe satellite;
la Fig. 9 est une vue avec cassure de la Fig. 8 selon le plan de section IX-IX;
la Fig. 10 est une vue en plan d'une variante de réalisation d'un organe satellite transportant un conteneur (organe satellite à entrée bilatérale);
la Fig. 11 est une vue similaire à celle de la Fig. 1 d'une variante de réalisation d'une installation (Celle-ci utilise un organe satellite similaire à celui de la Fig. 10 fonctionnant entre deux zones de production);
la Fig. 12 est une vue similaire à celle de la Fig. 2 d'un organe satellite portant un conteneur et transféré sur les moyens de guidage latéraux à l'aide de fourches montées sur le transtockeur;
la Fig. 13 est une vue de détail d'un rail latéral et d'une roue de l'organe satellite;
la Fig. 14 est une vue de la partie inférieure d'un conteneur situé au-dessus d'une station d'alimentation;
la Fig. 15 est une vue de la partie inférieure d'un conteneur connecté à une station d'alimentation;
la Fig. 16 est une vue de la partie supérieure d'un conteneur connecté à une station de réception;
la Fig. 17 est une vue similaire à celle des Figs 1 et 11, d'une variante de réalisation d'une installation suivant l'invention;
la Fig. 18 est une vue générale schématique d'une coupe verticale, longitudinale, suivant la ligne XVIII-XVIII de la Fig. 17;
la Fig. 19 est une coupe horizontale suivant la ligne XIX-XIX, des Figs 17 et 18.

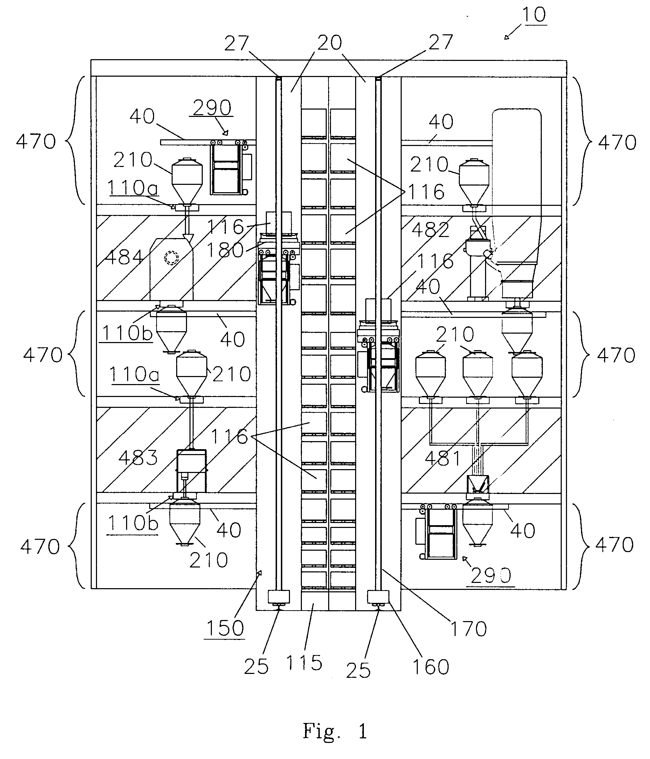

La figure 1 est une vue générale d'une coupe suivant un plan vertical d'une installation de transport automatique 10 de conteneurs 210 pour produits s'écoulant par gravité selon la présente invention. L'installation 10 comporte au moins un couloir principal 20 pourvu d'un rail 25 longitudinal (ici perpendiculaire au plan de coupe), sur lequel un moyen de levage 150 (généralement appelé transtockeur) est apte à se déplacer. Ce moyen de levage 150 a une hauteur qui équivaut sensiblement à la hauteur du bâtiment. Il est guidé à sa partie haute par un rail 27. Il comporte une base 160 apte à se déplacer sur le rail 25, un mât vertical 170 (ou éventuellement deux mâts) et une nacelle 180 apte à se déplacer verticalement le long du mât 170. Le mouvement horizontal du moyen de levage 150 et le mouvement vertical de la nacelle 180 sur le mât 170 permettent à ladite nacelle 180 d'atteindre n'importe quelle position dans un plan vertical.

L'installation selon l'invention est particulièrement adaptée à des complexes industriels comportant plusieurs étages. Dans l'exemple illustré à la Fig. l, le bâtiment comporte cinq étages. Les étages supérieur, central et inférieur sont des étages techniques 470 destinés notamment au transport des conteneurs 210 et à la distribution des fluides. Les deux étages situés respectivement entre l'étage supérieur et l'étage central couloir central 20.

Les rails latéraux 40 permettent d'acheminer les organes satellites 290 maintenant les conteneurs 210 vers des endroits où leur contenu doit être manipulé ou vers des postes de stockage. Les endroits où le contenu des conteneurs doit être manipulé sont pourvus de stations 110a,b, où le conteneur 210 reste immobilisé pendant un certain temps.

Lesdites stations 110a,b peuvent être soit des stations d'alimentation 110a, où le contenu d'un conteneur 210 est transféré dans un local de traitement, soit des stations de réception 110b, où un produit venant du local de traitement est récupéré dans un autre conteneur 210.

Pour la construction des étages techniques, une structure de poutrelles pourvue de simples passerelles métalliques (pour la maintenance) peut suffire. Cela permet de réaliser de sérieuses économies lors de la construction du bâtiment.

D'autres moyens de guidage latéral peuvent également être prévus, tels des convoyeurs à rouleaux ou des convoyeurs a chaînes.

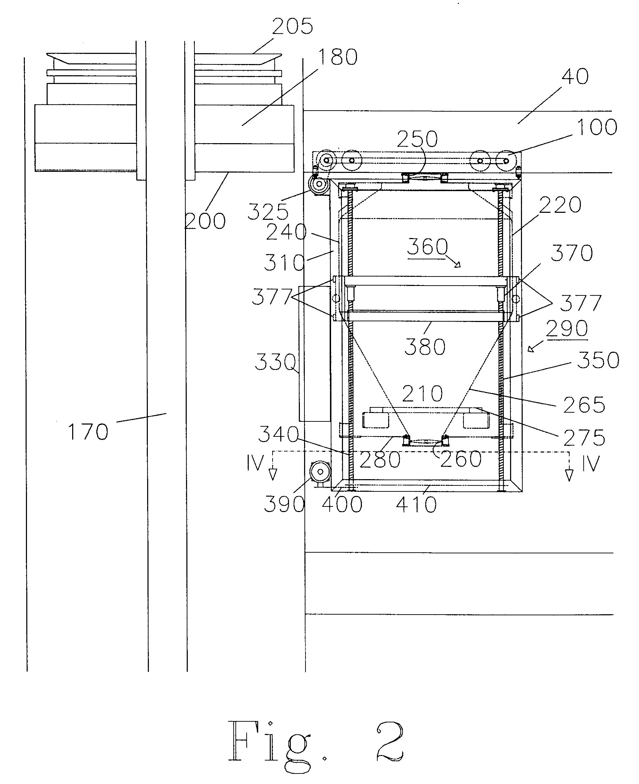

Les figures 2, 3 et 4 montrent un conteneur 210 pour produits s'écoulant par gravité, maintenu par un organe satellite 290, se trouvant dans un étage technique.

En général, le conteneur 210 comporte une paroi frontale 220, deux parois latérales 230, une paroi arrière 240, un orifice supérieur 250 dirigé vers le haut et un orifice inférieur 260 dirigé vers le bas, ainsi qu'une trémie 265 pour le déchargement du produit.

L'organe satellite 290 comporte une cage de forme parallélépipédique dont la face supérieure, la face inférieure et au moins une face latérale sont ouvertes.

Selon une forme d'exécution, la cage présente une section horizontale en forme d'un C, l'ouverture du C étant dirigée vers la paroi frontale 220 du conteneur 210. Dans ce cas, la cage comporte trois parois sensiblement rectangulaires, une paroi arrière 310 et deux parois latérales 320. Pour diminuer les coûts dus aux matériaux utilisés, ces parois 310, 320 peuvent se réduire à un assemblage de profilés formant un cadre rigide.

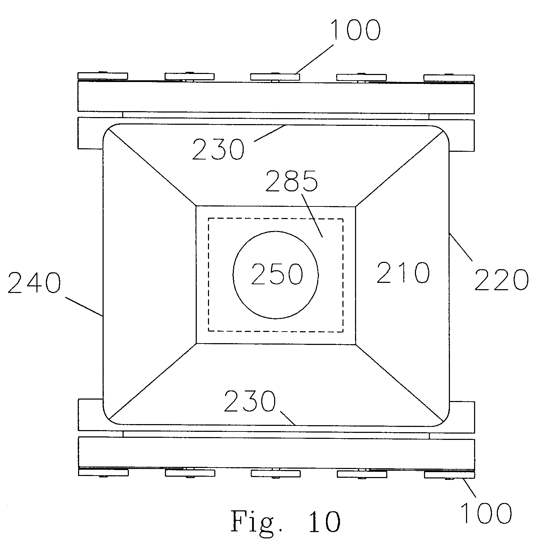

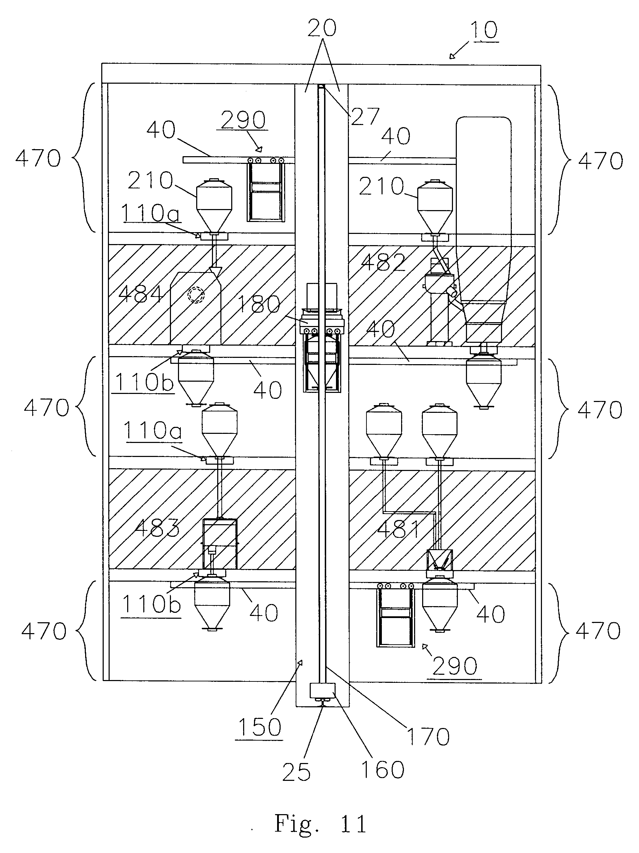

Dans certains cas, par exemple lorsque l'installation comporte une structure multi-étages de part et d'autre du couloir principal 20 (cf. fig. 11), la cage peut être conçue de manière telle que sa paroi arrière 310 soit supprimée. Dans ce cas, la structure formée par les parois latérales doit être renforcée en conséquence. La fig. 10 représente un organe satellite réalisé suivant cette variante. La section horizontale de la cage de l'organe satellite n'a alors plus la forme d'un C, mais la forme de deux barres. Ceci a comme avantage que les conteneurs 210 peuvent entrer d'un côté de l'organe satellite, et en sortir de l'autre côté, si souhaité.

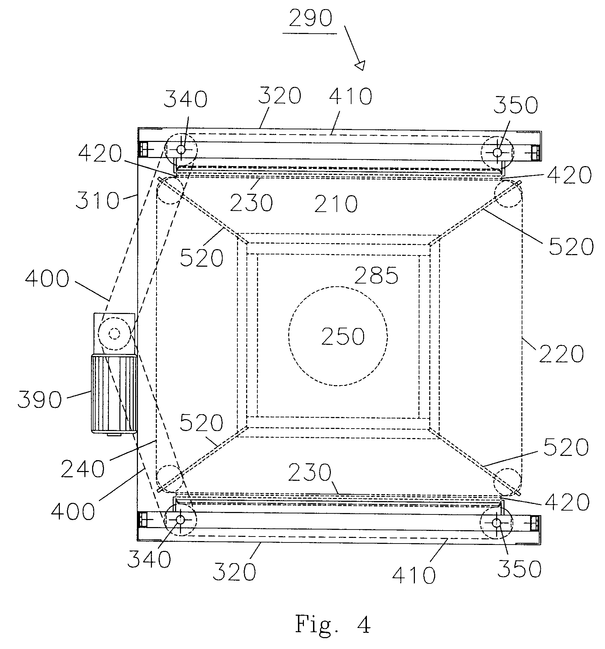

L'organe satellite 290, représenté à la Fig. 2, comporte un dispositif de translation verticale 360. Dans le mode de réalisation décrit aux figures 4 à 6, ce dispositif 360 comporte quatre vis sans fin 340, 350 s'étendant verticalement sur toute la hauteur de l'organe satellite 290. Ces quatre vis sans fin 340, 350 sont placées à l'intérieur de la cage, à proximité de ses quatre coins (Fig. 4). Les deux vis sans fin 340 situées à proximité de la paroi arrière 310 de l'organe satellite 290 sont reliées à l'aide de courroies d'entraînement 400 à un moteur 390 associé à un réducteur (on peut alors parler d'un moto-réducteur 390). Chacune des vis 340 est également reliée à l'aide d'une courroie d'entraînement crantée 410, à la vis sans fin 350 qui est placée à proximité du bord libre de la paroi 320 opposé au bord attenant à la paroi 310. De cette manière, les quatre vis 340, 350 tournent à la même vitesse lorsque le moto-réducteur 390 est mis en marche.

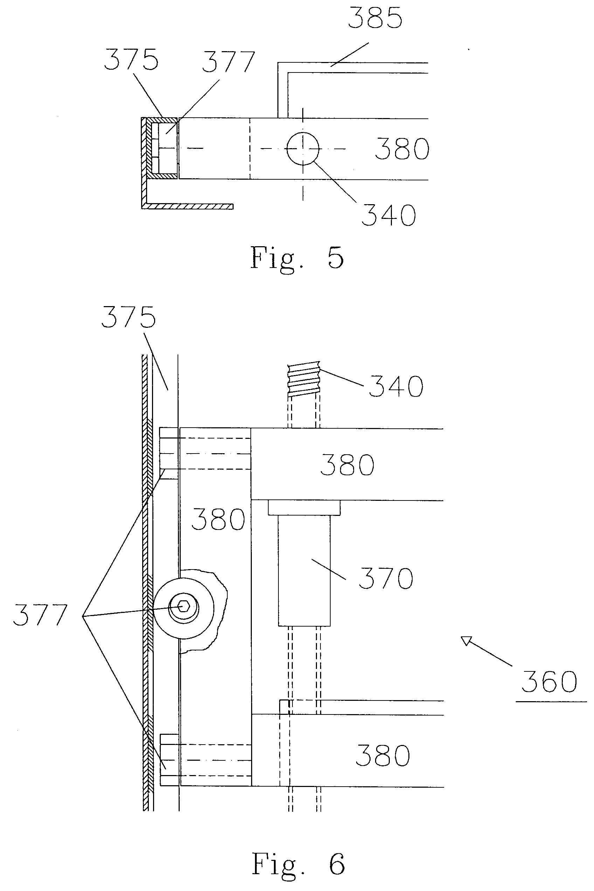

La figure 6 montre, de manière plus détaillée, que le dispositif de translation verticale 360 comporte un châssis 380 en deux parties disposées chacune parallèlement à une paroi latérale 320 de l'organe satellite 290 et aptes à se déplacer verticalement le long des vis 340, 350 par l'intermédiaire de quatre manchons filetés 370.

Pour éviter des torsions du dispositif de translation verticale 360, le châssis 380 est guidé par des coulisses verticales 375 dans les coins de l'organe satellite 290. Des roulements à billes 377 disposés aux quatre coins de chaque partie du châssis 380 guident son déplacement dans des coulisses 375.

Lorsque les quatre vis sans fin 340, 350 sont mises en rotation, les deux parties du châssis 380 sont déplacées vers le haut ou vers le bas, selon le sens de rotation des vis 340, 350. Les vis 340, 350 doivent, bien entendu, tourner à la même vitesse pour que les deux parties du châssis 380 se déplacent de manière uniforme.

Ce dispositif de translation verticale 360 permet de monter ou descendre un conteneur 210 d'une hauteur d'environ 1 mètre, (ou plus si la disposition de l'installation le justifie), de manière à approcher ce conteneur 210 soit d'une station de réception 110b, soit d'une station d'alimentation 110a.

D'autres dispositifs de translation verticale peuvent être envisagés tels des dispositifs comportant moins de quatre vis ou des dispositifs fonctionnant au moyen de câbles, de chaînes, de vérins hydrauliques ou pneumatiques, ou de crémaillères.

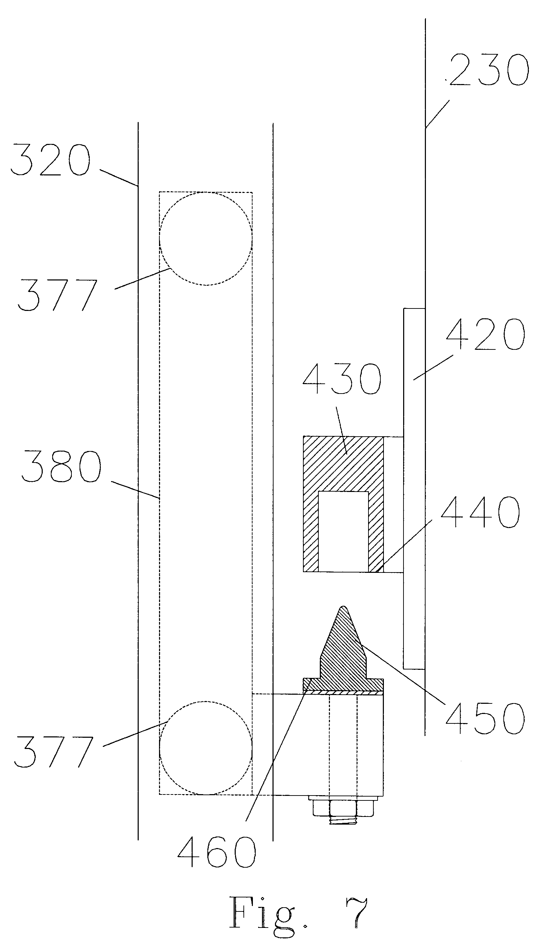

Des ergots de positionnement 450, (cf. Fig.7) dirigés vers le haut, sont fixés à chaque partie du châssis 380. Une surface d'appui 460 s'étend horizontalement tout autour de chaque ergot 450.

Le conteneur 210 comporte quatre plaques de renforcement 420 fixées à l'extérieur de ses deux parois latérales 230 aux endroits correspondants à l'emplacement des ergots 450. Sur chacune de ces plaques de renforcement 420 est fixé un fourreau 430 fermé ou non à sa partie supérieure, apte à s'engager sur l'ergot 450 correspondant du châssis 380. Un jeu d'environ 1 mm est ménagé entre le bord extérieur de l'ergot 450 et le bord intérieur du fourreau 430 lorsque celui-ci est engagé sur l'ergot 450. Le bord inférieur 440 du fourreau 430 est apte à reposer sur la surface d'appui 460 disposée autour de chaque ergot 450.

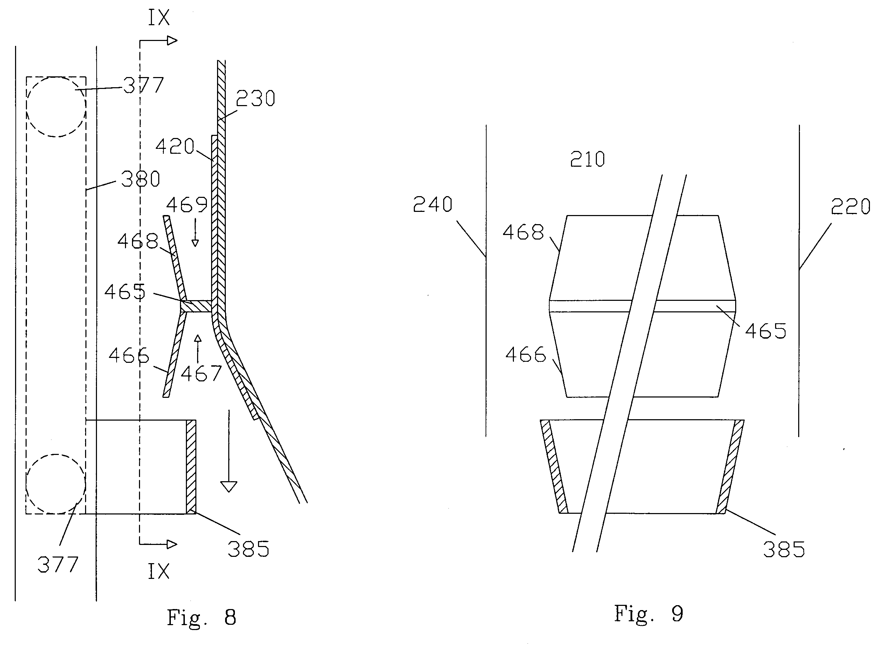

D'autres systèmes de positionnement sont encore possibles, comme par exemple celui illustré aux figures 8 et 9 et qui sera décrit plus loin.

Au lieu d'être actionnées par des courroies 400, 410, les quatre vis 340, 350 peuvent être actionnées de façon similaire par des chaînes, par un engrenage à vis sans fin ou par une transmission par engrenages coniques. Il est à la portée de l'homme du métier de remplacer ces organes mécaniques par tout autre dispositif approprié.

Dans la forme d'exécution de l'invention illustrée aux Fig. 1, 2, 3, 11, 12, les rails latéraux 40 sont fixés à la partie supérieure des étages techniques. L'organe satellite 290 comporte alors à sa partie supérieure, des roues 100 aptes à s'engager dans les doubles rails 40.

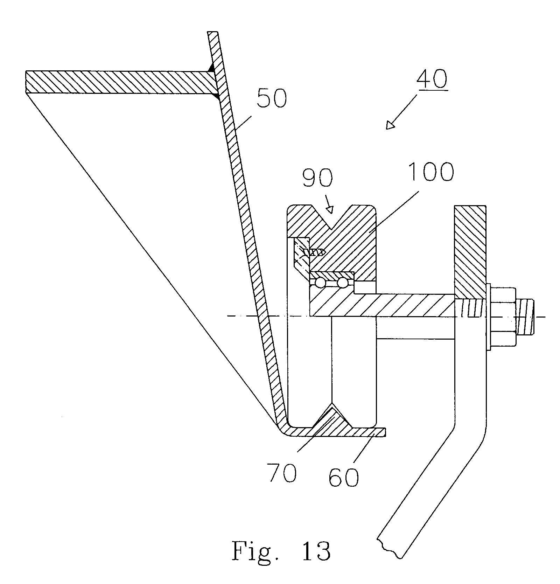

Suivant un mode d'exécution illustré à la figure 13, les doubles rails 40 des étages techniques 470 ont, en section verticale, la forme d'un L, dont l'angle entre la branche 50 dirigée vers le haut et la branche 60 placée horizontalement, est obtus. Cette forme permet de guider les roues 100 vers la bonne position.

Une nervure 70 est ménagée sur la branche horizontale 60 du rail 40 et une gorge 90 de forme correspondante est prévue sur le pourtour des roues 100 pour assurer un bon maintien de celles-ci sur les rails 40.

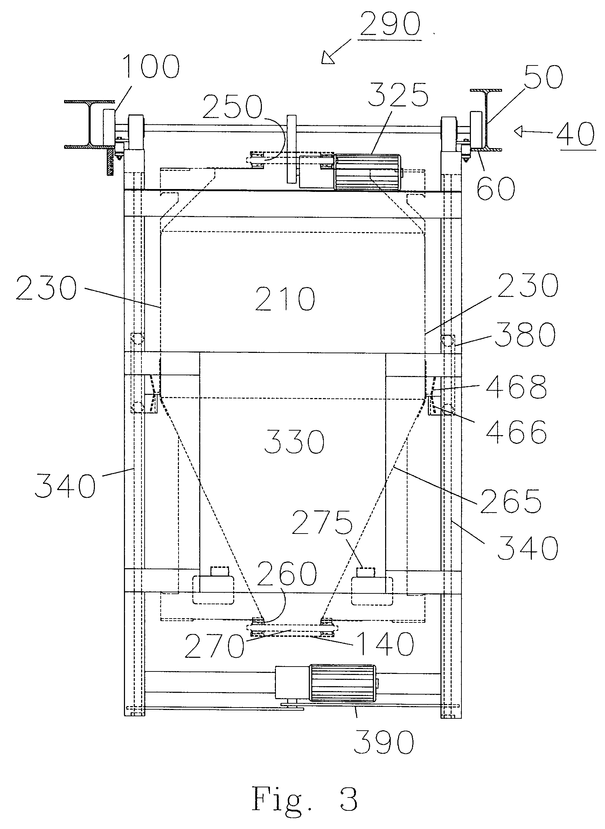

Suivant le mode particulier d'exécution de l'invention illustré aux figures 2 et 3, la nacelle 180 du transtockeur 150 comporte des doubles rails 200, fixés à sa partie inférieure, auxquelles l'organe satellite peut être suspendu par l'intermédiaire de ses roues 100.

Une palette 116 peut également être transportée sur la nacelle 180 (Fig. 1).

Lorsqu'un conteneur 210 saisi par l'organe satellite 290 doit être amené par la nacelle 180 du moyen de levage 150 vers un étage technique 470 préalablement indiqué, la nacelle 180 est amenée d'une manière extrêmement précise à une distance d'environ 20 millimètres des rails latéraux 40 de telle sorte que les rails 200 de la nacelle 180 soient situés dans le prolongement des rails 40 de l'étage technique 470. De la sorte, les roues 100 de l'organe satellite 290 peuvent passer des doubles rails 200 de la nacelle 180 aux doubles rails 40. Dès lors, ces roues 100 sont actionnées par un système d'actionnement qui se trouve sur l'organe satellite 290 lui-même. Ce système d'actionnement est ici un moteur électrique 325 associé à un variateur de vitesse et commandé par un organe de commande 330 constitué par un automate programmable généralement appelé PLC (Programmable Logic Controller), ou par d'autres circuits électriques classiques, que l'organe satellite 290 porte à son bord.

L'organe satellite 290 est alimenté en électricité, soit à partir d'une batterie embarquée, soit à partir de frotteurs glissant le long d'un rail d'alimentation.

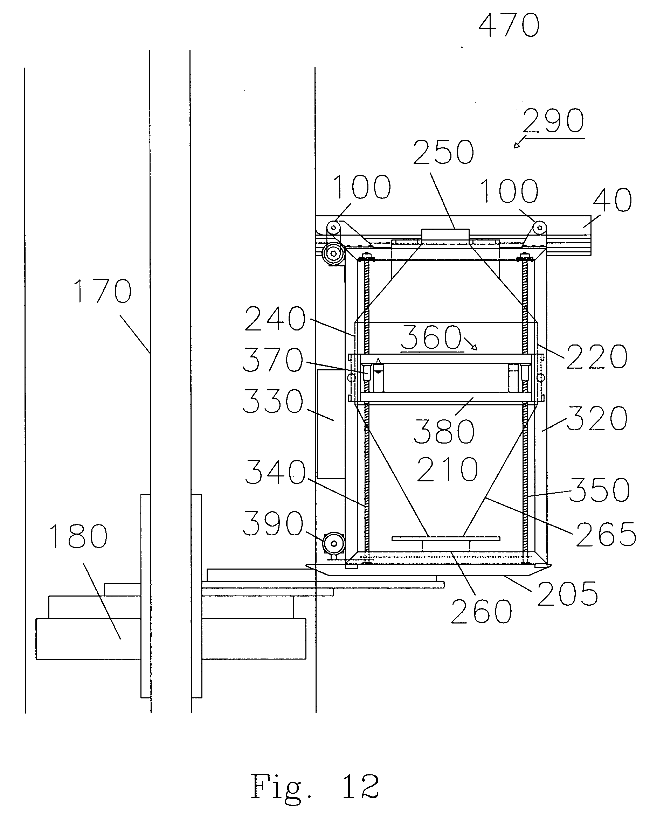

La figure 12 montre un autre mode d'exécution de l'invention où la nacelle 180 comporte des fourches télescopiques 205 sur lesquelles l'organe satellite 290 peut reposer. L'organe satellite 290, portant le conteneur 210, est amené par les fourches 205 de la nacelle 180 vers un étage technique 470. Les roues 100 qui se trouvent à la partie supérieure de l'organe satellite 290 sont placées sur les rails 40, après quoi le processus se déroule de la même façon qu'expliqué ci-dessus.

L'organe satellite 290 portant un conteneur 210 se déplace, suspendu aux rails 40 jusqu'à ce qu'il arrive à une station 110a ou 110b appropriée. Une fois le conteneur arrive juste au-dessus d'une station d'alimentation 110a ou en-dessous d'une station de réception 110b, les quatre vis sans fin 340, 350 sont actionnées. L'organe de commande 330 monté à bord de l'organe satellite 290 est programmé pour détecter si le conteneur 210 est amené vers une station d'alimentation 110a, ou vers une station de réception 110b. Selon le cas, il donne instruction de faire tourner les vis 340, 350 à droite ou à gauche, pour faire descendre ou lever le dispositif de translation verticale 360, et donc le conteneur 210.

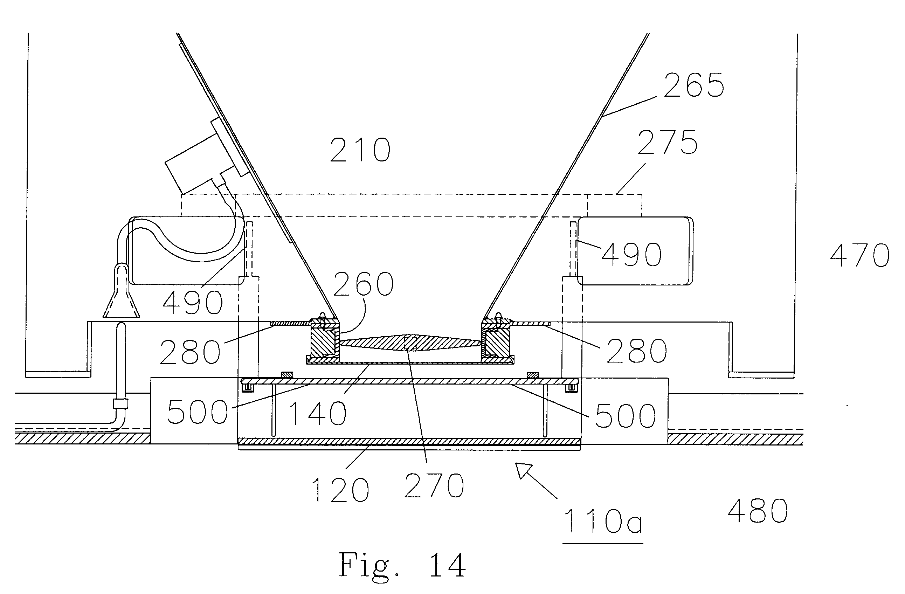

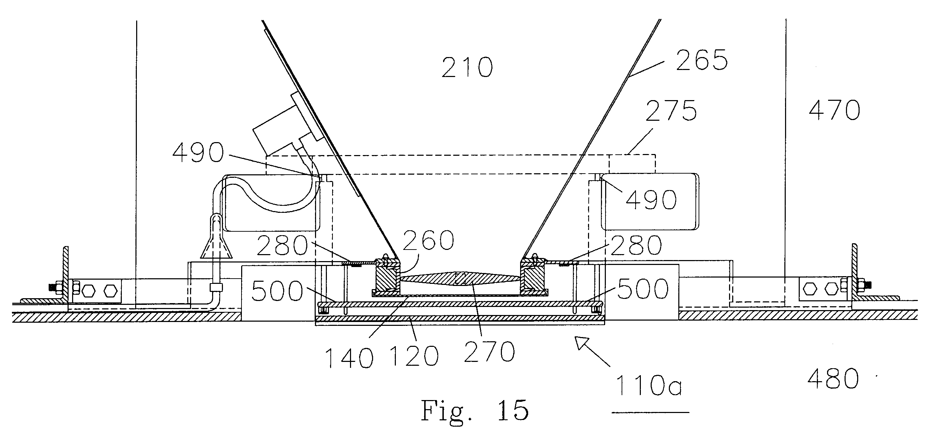

La figure 14 montre un conteneur 210 situé juste au-dessus d'une station d'alimentation 110a fermée, et la figure 15 montre le conteneur accouplé, de manière tout à fait étanche, à un station d'alimentation 110a.

Le local de traitement situé sous la station 110a possède, dans le plafond, une trappe 120 faisant partie de la station d'alimentation 110a. Elle peut être ouverte manuellement par un opérateur se trouvant dans le local de traitement.

Le conteneur 210, fermé à sa partie inférieure par une vanne 270 et par un couvercle 140, est positionné par des moyens de repérage connus (non représentés) juste au-dessus de la station 110a. Ces moyens peuvent être par exemple des détecteurs optiques, infrarouges, magnétiques, etc.

Avant que le conteneur 210 n'arrive à la station d'alimentation 110a, celle-ci est fermée par un couvercle 500 maintenu dans sa position supérieure par un système de ressorts. Le conteneur 210, dès qu'il est correctement positionné, est descendu par le dispositif de translation verticale 360. Le moyen d'ouverture 275 de ce conteneur appuie alors progressivement sur les tiges 490 du système de ressorts (voir figures 14 et 15). Ces tiges 490 descendent, et font descendre ainsi le couvercle 500 qui fermait la station d'alimentation 110a.

L'orifice inférieur 260 du conteneur 210 peut être introduit dans la station 110a, et le conteneur 210 peut continuer à descendre jusqu'à ce qu'une collerette 280, entourant la partie inférieure du conteneur 210, vienne fermer l'ouverture de la station 110a.

Pour diminuer le plus possible la contamination éventuelle de l'atmosphère et du produit, de l'air filtré ou un gaz inerte est soufflé dans la station 110a de manière à en extraire toute poussière ou impureté.

La trappe 120 et le couvercle 500 de la station étant transparents, un opérateur se trouvant dans le local de traitement 480 près de la trappe 120 peut vérifier si le conteneur 210 amené est bien celui qu'il lui faut, pour autant que des informations concernant le contenu du conteneur 210 soient inscrites sur le couvercle 140 du conteneur 210, ou sur la collerette 280.

Tant que la station 110a est considérée comme potentiellement contaminée, la trappe 120 ne peut pas être ouverte. Un verrouillage automatisé est prévu. Après passage de l'air filtré ou du gaz inerte, le verrouillage automatisé se débloque et la trappe 120 peut être ouverte manuellement. Le couvercle 500 de la station est facile à enlever manuellement, tout comme le couvercle 140 du conteneur 210. La connexion entre l'orifice inférieur 260 du conteneur 210 et un conduit (non représenté) amenant le produit vers son lieu de traitement peut être effectuée. Après ouverture de la vanne 270, le produit peut s'écouler vers son lieu de traitement.

Après transfert du produit, le conteneur 210 peut être retiré et la station 110a peut être refermée en effectuant un ensemble d'opérations inverses à celles décrites ci-dessus. Le couvercle 500 est remis en place et, les tiges 490 étant connectées à des ressorts 485, ce couvercle 500 reprendra automatiquement sa place initiale quand le moyen d'ouverture 275 n'appliquera plus de pression sur les tiges 490.

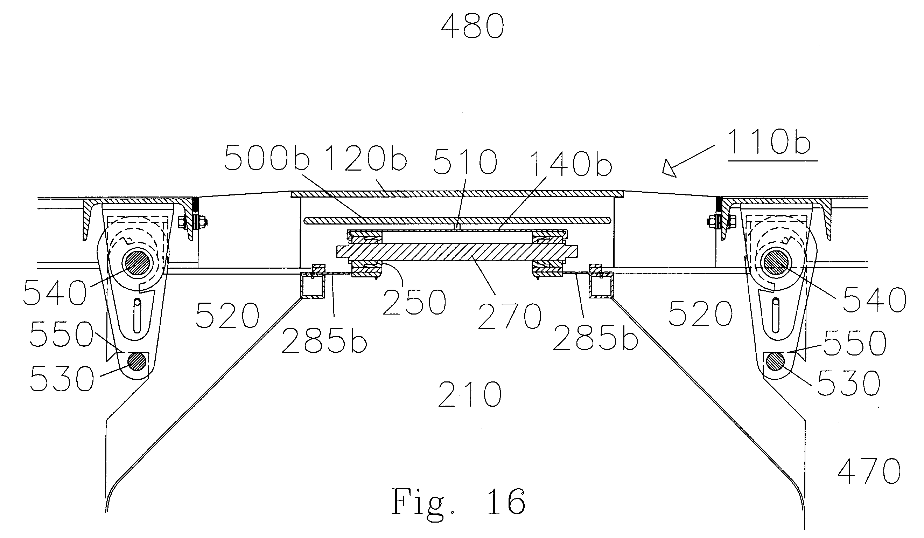

Un principe similaire s'applique pour la connexion du conteneur 210 à une station 110b de réception du produit, sous le local de traitement 480 (figure 16). Cette fois-ci, le local de traitement 480 possède une trappe 120b dans le sol, faisant partie de la station de réception 110b qui est apte à recevoir l'orifice supérieur 250 du conteneur 210. Le conteneur 210 est soulevé par le dispositif de translation verticale 360. Le couvercle 500b de la station est tenu dans sa position inférieure par la gravité. Au moins trois pieds cylindriques 510 sont fixés sur le couvercle supérieur 140b du conteneur 210. Ils créent un espace entre le couvercle 140b du conteneur 210 et le couvercle 500b de la station quand le conteneur 210 est levé par le dispositif de translation verticale 360.

Le conteneur 210, muni de quatre ailerons 520 (voir figure 16), est soulevé par le dispositif de translation verticale 360 jusqu'à ce qu'il se trouve quelques millimètres sous la station de réception 110b. Les ailerons sont des plaques verticales placées radialement à la partie supérieure du conteneur 210. Ils ont une échancrure 550 dans laquelle s'engage une barre de levage 530. Cette barre de levage 530 soulève le conteneur 210 par rotation d'une came solidaire d'un axe horizontal 540, jusqu'à ce que la collerette supérieure 285b du conteneur 210 vienne fermer l'ouverture de la station de réception 110b. Le conteneur 210 est maintenu dans sa position supérieure grâce à ses ailerons 520 et à la barre de levage 530. Ce système de blocage du conteneur 210 est actionné par un système mécanique.

Ici aussi de l'air filtré ou un gaz inerte est soufflé dans la station 110b de manière à en retirer toute poussière ou impureté.

La trappe 120b et le couvercle 500b étant également transparents, un opérateur se trouvant dans le local de traitement 480 peut vérifier si c'est le bon conteneur 210 qui est amené, et il peut faire des actions similaires pour connecter le conteneur 210 et un conduit (non représenté), et pour faire écouler le produit dans le conteneur 210. Pour enlever le conteneur 210, un ensemble d'opérations inverses à celles décrites ci-dessus doit être effectué.

Les barres 530 descendent de façon à déposer le conteneur 210 sur le châssis 380 du système de translation verticale 360. Ceci fait, les barres 530 s'écartent pour permettre la descente du conteneur 210.

De nombreuses variantes d'exécution pourraient être imaginées par l'homme de métier.

Divers moyens d'appui du conteneur sur l'organe satellite 290 peuvent être envisagés. Les Figs. 8 et 9 montrent une variante d'exécution de ces moyens d'appui. Sur chaque plaque de renforcement 420 du conteneur est fixé un profilé 465 s'étendant horizontalement le long des parois latérales du conteneur 210 et auquel est fixé une plaque de guidage 466 s'étendant également horizontalement et dont le bord longitudinal libre est dirigé vers le bas en s'écartant légèrement du conteneur 210. Le profilé 465 et la plaque de guidage 466 forment ainsi une gouttière horizontale 467 s'évasant vers le bas.

Le dispositif de translation verticale 360 comporte alors un organe de préhension 385 de forme correspondante, apte à s'engager dans la gouttière 467 du conteneur 210. Cet organe de préhension 385 est constitué d'un profilé horizontal et de section rectangulaire dont les extrémités repliées sont fixées au châssis 380 et dont les deux bords longitudinaux sont orientés l'un vers le haut et l'autre vers le bas. Comme le montrent les figures 8 et 9, cet organe de préhension 385 est constitué par un profilé horizontal.

Le conteneur peut encore comporter une seconde plaque de guidage 468 similaire fixée à la partie supérieure du profilé 465 et dont le bord longitudinal libre est dirigé vers le haut. Cette seconde plaque de guidage 468 forme une seconde gouttière 469 s'évasant vers le haut.

Cette seconde gouttière 469 est apte à recevoir le même organe de préhension de l'organe satellite 290 décrit ci-dessus, lorsque le conteneur est retourné de 180°.

En effet, il peut être avantageux d'utiliser des conteneurs n'ayant qu'un seul orifice. Cet orifice sera dirigé vers le bas lorsque le conteneur doit décharger son contenu par l'intermédiaire d'une station d'alimentation 110a. Lorsque le conteneur devra réceptionner un produit par l'intermédiaire d'une station de réception 110b, le conteneur sera retourné de 180° pour que son orifice unique soit dirigé vers le haut. A l'opposé de l'orifice, le conteneur peut comporter un accès permettant son nettoyage aisé.

Un tel conteneur réversible a comme avantage qu'il n'y a qu'une seule face à n'importe quelle station, et que l'étiquette du système d'identification indiquant le contenu du conteneur, qui apparaît sur la collerette, peut être lue des deux stations.

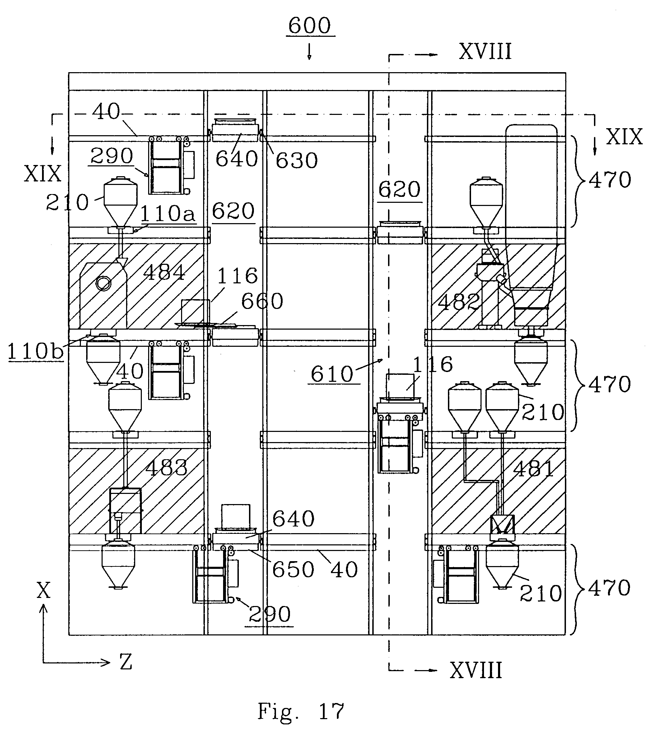

Les Figs. 17, 18, 19 présentent une variante d'exécution de l'invention qui, suivant la configuration de l'usine, peut se révéler particulièrement avantageuse.

Dans cette variante, l'installation 600 ne comporte plus de transtockeur 150 se déplaçant le long d'un chemin de roulement 25, mais comporte un ou plusieurs monte-charges fixes 610, 615, aptes à transporter un organe satellite 290 et comporte des couloirs 620, à chaque étage. Ces couloirs 620 sont équipés de moyens de roulement 630 sur lesquels un chariot 640 peut se déplacer.

Des doubles rails 40 disposés perpendiculairement à ces couloirs 620 permettent d'acheminer l'organe satellite 290 vers une station de transfert 110.

Le chariot 640 peut être muni de deux tronçons de rails 650 permettant de transporter l'organe satellite 290 par l'intermédiaire de ses roues 100.

Si on le désire, le chariot 640 peut aussi, de façon annexe, transporter des palettes 116, à l'aide de fourches 660 (fig. 17) ou de tables à rouleaux situés en partie supérieure du chariot 640. Le chariot 640 peut effectuer ce transport, soit simultanément soit indépendamment du transport des conteneurs 210.

L'organe satellite 290 peut ainsi, sans avoir recours à un transtockeur, se déplacer dans les trois directions orthogonales X, Y, Z, c'est-à-dire atteindre n'importe quel point dans le bâtiment et y prendre ou y apporter n'importe quel conteneur 210.

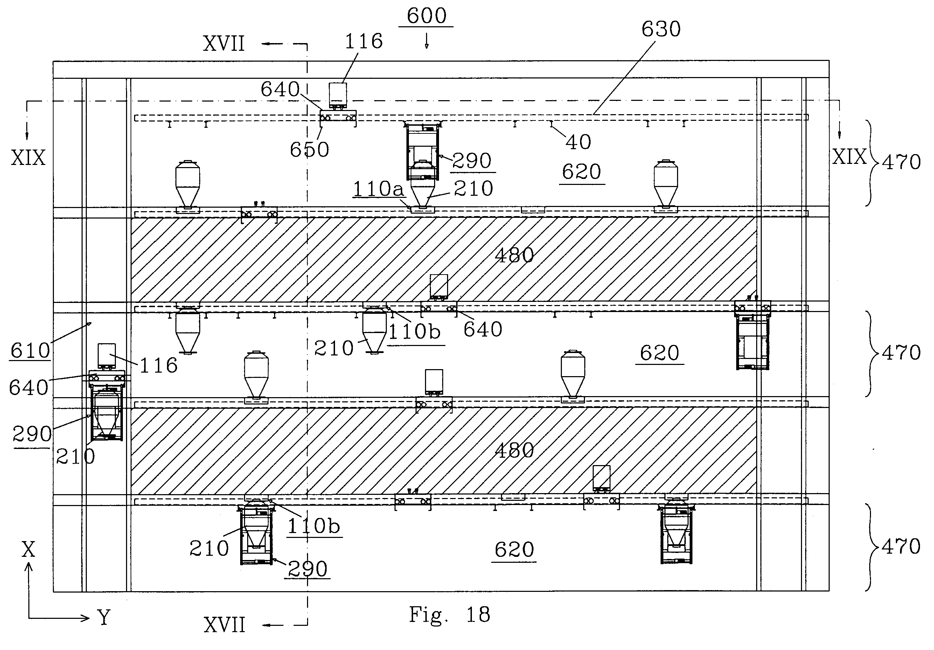

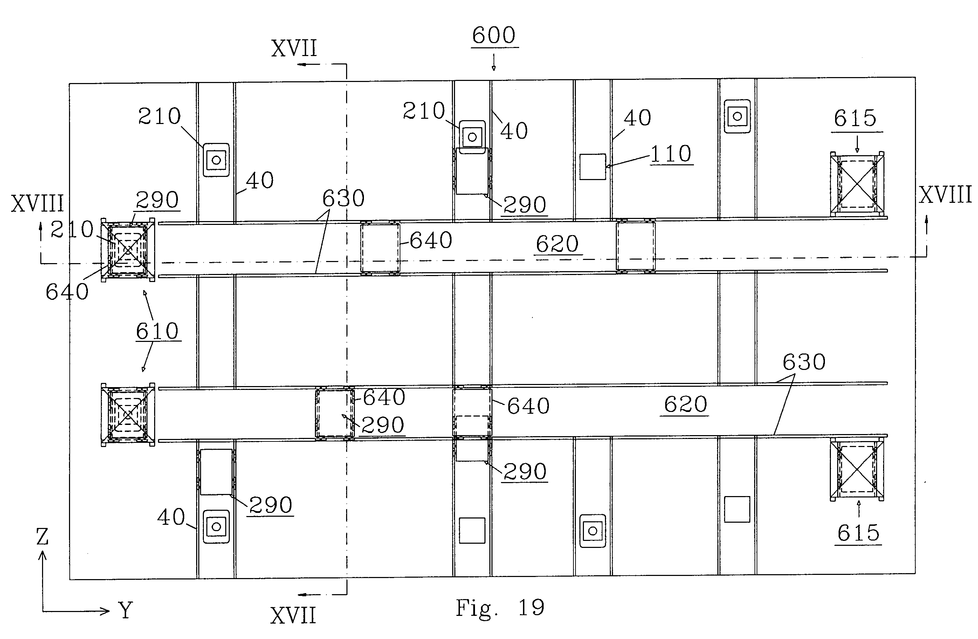

L'organe satellite 290 peut donc, à volonté, déposer des conteneurs 210 sur des stations d'alimentation 110a, ou accrocher des conteneurs 210 à des stations de réception 110b, à l'aide de son dispositif de translation verticale 360 (fig.17, 18). Il peut se déplacer, le long des rails 40, dans une direction s'étendant selon l'axe des Z (fig. 18, 19), se solidariser avec un chariot 640, sur ses tronçons de rails 650, pour effectuer un déplacement selon l'axe des Y, et être transporté, verticalement, par le monte-charge selon l'axe des X.

Sur la Fig. 19 sont combinés plusieurs modes de réalisation possibles de l'installation. A la partie gauche de la Fig. 19, les monte-charges 610 se situent dans le prolongement des couloirs 620 respectifs. Le chariot 640, transportant un organe satellite 290 et un conteneur 210, peut emprunter, avec sa charge, le monte-charge 610.

La partie droite de la fig. 19 illustre le mode de réalisation dans lequel les monte-charges 615 ne sont pas situés dans le prolongement des couloirs 620. Dans ce cas, le chariot 640 peut amener l'organe satellite 290 en face d'un monte-charge 615 et cependant que l'organe satellite 290 emprunte seul le monte-charge 615, le chariot 640 demeure sur son chemin de roulement 630. Il peut dès lors s'acquitter, sans plus attendre, d'une nouvelle mission qui lui est assignée par le système de gestion.

Suivant une autre variante de réalisation de l'invention (non illustrée), l'organe satellite 290 comporte deux jeux de roues lui permettant de se déplacer suivant les deux axes horizontaux différents (Y, Z). Dans ce cas, le chariot n'est pas nécessaire, l'organe satellite 290 pouvant se déplacer, par lui-même, le long des couloirs horizontaux 620, (axe des Y) et le long des rails 40 (axe des Z).

Le système de gestion automatique associé au dispositif suivant l'invention permet de travailler dans des conditions de sécurité plusieurs fois renforcées. Non seulement la disposition de l'installation en elle-même permet d'éviter la contamination croisée entre les locaux "propres" et les locaux techniques, mais en outre, des systèmes de détection associés aux organes satellites permettent un contrôle sans faille (par exemple, par lecture optique) du type de produit présent dans un conteneur, de la quantité transportée (en intégrant dans le satellite un dispositif de pesée par jauge de contrainte), d'identifier la station, de vérifier si cette identification correspond au type de processus en cours, etc..

En outre, la position de chaque organe satellite étant connue et vérifiable à tout instant, le système de gestion peut générer les instructions relatives à l'itinéraire le plus approprié et même dévier les organes satellites vers d'autres itinéraires en cas d'incident mineurs, sans interruption du processus de production.

Si l'on a pris la précaution de prévoir un système de gestion suffisamment puissant, il est du reste parfaitement possible d'intégrer dans l'installation, en fonction des impératifs de production, un nombre croissant d'organes satellites, sans que cela implique autre chose que des ajustements mineurs.

Par rapport aux usines horizontales, l'objet de l'invention présente de nombreux avantages, notamment il occupe moins de terrain, la gravité peut être utilisée comme système de transport, et on a besoin de liaisons plus courtes (gaines de conditionnement d'air, distribution des fluides, lignes électriques, couloirs pour le personnel, ...).

Par rapport aux complexes industriels pharmaceutiques, disposés en plusieurs étages, l'objet de l'invention a comme avantage que les coûts de construction sont réduits par rapport aux installations précédentes, parce que le poids de l'AGV (jusqu'à 5 tonnes, en charge par AGV) ne doit plus être supporté par chaque endroit du bâtiment. Le poids du conteneur est réparti sur toute la longueur d'un rail. Le sol ne doit plus comporter aucune finition particulière. Le système est très souple et s'adapte sans problème à des extensions ou à une accélération du système de production entraînant un accroissement du trafic.

Il est, en outre, particulièrement avantageux d'utiliser le dispositif de transfert avec les stations de transfert étanches telles que décrites dans le brevet EP-A-0 619 254.

## Revendications

1. Installation (10, 600) de transfert de produits s'écoulant par gravité, intégrée à une usine de production à plusieurs étages comportant, d'une part, des locaux de traitement (480) des produits et, d'autre part, des zones techniques (470), ladite installation (10, 600) comportant:
- des conteneurs hermétiques (210) pourvus d'au moins un orifice obturable (250, 260),
- des stations (110a, b) de transfert sans contamination des produits s'écoulant par gravité, à partir d'un conteneur (210) vers un local de traitement (480) (station d'alimentation (110a)) et/ou à partir d'un local de traitement (480) vers un conteneur (210) (station de réception (110b)),
- au moins un organe satellite (290) comportant une cage de forme parallélépipédique, ouverte à ses parties inférieure et supérieure et à au moins un de ses côtés latéraux, ledit organe satellite (290) étant apte à porter un des dits conteneur (210) et apte à lever et descendre ledit conteneur (210), grâce à un dispositif de translation verticale (360) propre à cet organe satellite (290), de manière à permettre son accouplement aux dites stations (110a,b), ledit organe satellite (290) étant apte à être déplacé suivant au moins un axe horizontal (Y) et un axe vertical (X), par des moyens de manutention (150, 610, 615, 640), ledit organe satellite (290) comportant des moyens de déplacement propres (100) aptes à coopérer avec des moyens de guidage (40), de manière à permettre à l'organe satellite (290) de se déplacer le long d'au moins un axe horizontal (Z), de manière autonome par rapport aux moyens de manutention (150, 610, 615, 640), lesdits moyens de guidage (40) étant aptes à guider l'organe satellite (290) entre les moyens de manutention (150, 610, 615, 640) et lesdites stations (110a, b), l'ensemble des moyens de manutention (150, 610, 615, 640), des moyens de guidage (40), du ou des organes satellites (290) et les conteneurs (210) étant disposé dans les zones techniques (470),
- des moyens de repérage et de positionnement des conteneurs (210), et
- un système de gestion apte à gérer l'ensemble des mouvements des moyens de manutention (150, 610, 615, 640), du au moins un organe satellite (290) et des conteneurs (210).

2. Installation (10) suivant la revendication précédente, caractérisée en ce que lesdits moyens de manutention comportent au moins un engin de levage (150) comportant une nacelle (180) apte à se déplacer verticalement, ledit moyen de levage (150) étant apte à se déplacer le long d'un organe de guidage (25).

3. Installation (600) suivant la revendication 1, caractérisée en ce que lesdits moyens de manutention comportent au moins un engin de levage fixe (610, 615) et comportent plusieurs moyens de transport horizontal (640) disposés à différents étages.

4. Installation (10, 600) suivant l'une quelconque des revendications précédentes, caractérisée en ce que l'organe satellite (290) comporte des moyens de préhension (450, 460, 385) des conteneurs (210) et les conteneurs (210) comportent des moyens de suspension (430, 440, 467, 469) aptes à coopérer avec lesdits moyens de préhension (385, 450, 460).

5. Installation (10, 600) suivant l'une quelconque des revendications précédentes, caractérisée en ce que les stations d'alimentation (110a) sont situées dans le plafond des locaux de traitement (480).

6. Installation (10, 600) suivant l'une quelconque des revendications précédentes, caractérisée en ce que les stations de réception (110b) sont situées dans le plancher des locaux de traitement (480).

7. Installation (10, 600) suivant la revendication 6, caractérisée en ce que les stations de réception (110b) comportent des dispositifs d'accrochage (530, 540) aptes à coopérer avec des dispositifs de suspension (550) du conteneur (210), afin de maintenir ce dernier en position sous les stations (110b).

8. Installation (10, 600) suivant l'une quelconque des revendications précédentes, caractérisée en ce qu'elle comporte aussi des zones de parking, où sont placés un ou plusieurs conteneurs (210) en attente.

9. Installation (10, 600) suivant l'une quelconque des revendications précédentes, caractérisée en ce que les moyens de manutention (150, 610, 615, 640) comportent un double rail (200, 650) apte à coopérer avec l'organe satellite (290).

10. Installation (10, 600) suivant l'une quelconque des revendications précédentes, caractérisée en ce que les moyens de manutention (150, 610, 615, 640) comportent des fourches (205) aptes à transporter l'organe satellite (290).

11. Installation (10, 600) suivant l'une quelconque des revendications précédentes, caractérisée en ce que, outre l'organe satellite (290), les moyens de manutention (150, 610, 615, 640) sont aptes à transporter, simultanément ou non, des palettes (116).

12. Installation (10, 600) suivant l'une quelconque des revendications précédentes, caractérisée en ce que certains des conteneurs (210) comportent un orifice supérieur (250) apte à s'engager dans la station de réception (110b) et un orifice inférieur (260) apte à s'engager dans la station d'alimentation (110a).

13. Installation (10, 600) suivant l'une quelconque des revendications précédentes, caractérisée en ce que certains des conteneurs sont réversibles et comportent un orifice unique apte à s'engager dans une station de réception (110b) et dans une station d'alimentation (110a).

14. Installation (10, 600) suivant l'une quelconque des revendications précédentes, caractérisée en ce que le dispositif de translation verticale (360) de l'organe satellite (290) comporte
- des vis sans fin (340, 350) mises en mouvement à l'aide d'un moteur (390) et d'un ensemble de mécanismes d'entraînement (400, 410),
- un châssis (380) muni des dits moyens de préhension (385, 450, 460) du conteneur (210) et apte à se déplacer verticalement le long des vis sans fin (340, 350).

15. Installation (10, 600) suivant l'une quelconque des revendications précédentes, caractérisée en ce que lesdits moyens de déplacement propres de l'organe satellite (290) sont des roues (100) mises en mouvement par un système d'entraînement (325) et un système d'actionnement (330) porté à bord du dispositif (290) lui-même.

16. Installation (10, 600) suivant l'une quelconque des revendications précédentes, caractérisée en ce que l'organe satellite (290) comporte deux jeux de roues lui permettant des déplacements suivant deux axes horizontaux différents (Y, Z).

17. Installation (10, 600) suivant l'une quelconque des revendications précédentes, caractérisée en ce que l'organe satellite (290) est alimenté par batterie embarquée à bord de l'organe satellite (290) lui-même.

18. Installation (10, 600) suivant l'une quelconque des revendications 1 à 16, caractérisée en ce que l'organe satellite (290) est alimenté électriquement à partir de frotteurs glissant le long d'un rail d'alimentation électrique.

## Claims

1. Installation (10, 600) for transferring products flowing by gravity, which is integrated into a production factory with several storeys including, on the one hand, premises (480) for processing the products and, on the other hand, technical areas (470), the said installation (10, 600) including:
- airtight containers (210) provided with at least one closable orifice (250, 260),
- stations (110a, b) for contamination-free transfer of the products flowing by gravity, from a container (210) to a processing premises (480) (feed station (110a)) and/or from a processing premises (480) to a container (210) (reception station (110b)),
- at least one satellite unit (290) including a cage of parallelepipedal shape, open at its lower and upper parts and at at least one of its lateral sides, the said satellite unit (290) being able to carry one of the said containers (210) and able to raise and lower the said container (210) by virtue of a vertical translation device (360) belonging to this satellite unit (290), in such a way as to allow it to be coupled to the said stations (110a, b), the said satellite unit (290) being able to be moved along at least one horizontal axis (Y) and one vertical axis (X) by handling means (150, 610, 615, 640), the said satellite unit (290) including its own movement means (100) able to interact with guidance means (40), in such a way as to allow the satellite unit (290) to move along at least one horizontal axis (Z), independently with respect to the handling means (150, 610, 615, 640), the said guidance means (40) being able to guide the satellite unit (290) between the handling means (150, 610, 615, 640) and the said stations (110a, b), all of the handling means (150, 610, 615, 640), the guidance means (40), the satellite unit or units (290) and the containers (210) being arranged in the technical areas (470),
- means of identifying and of positioning the containers (210), and
- a management system able to manage all the movements of the handling means (150, 610, 615, 640) of the at least one satellite unit (290) and of the containers (210).

2. Installation (10) according to the preceding claim, characterized in that the said handling means include at least one lifting hoist (150) including a carriage (180) able to move vertically, the said lifting hoist (150) being able to move along a guide element (25).

3. Installation (600) according to Claim 1, characterized in that the said handling means include at least one fixed lifting hoist (610, 615) and include several horizontal transport means (640) arranged on different storeys.

4. Installation (10, 600) according to any one of the preceding claims, characterized in that the satellite unit (290) includes means (450, 460, 385) for gripping the containers (210) and the containers (210) include suspension means (430, 440, 467, 469) able to interact with the said gripping means (385, 450, 460).

5. Installation (10, 600) according to any one of the preceding claims, characterized in that the feed stations (110a) are located in the ceiling of the processing premises (480).

6. Installation (10, 600) according to any one of the preceding claims, characterized in that the reception stations (110b) are located in the floor of the processing premises (480).

7. Installation (10,600) according to Claim 6, characterized in that the reception stations (110b) include hooking devices (530, 540) able to interact with suspension devices (550) of the container (210) so as to maintain the latter in position under the stations (110b).

8. Installation (10, 600) according to any one of the preceding claims, characterized in that it also includes parking zones, where one or more containers are placed on standby.

9. Installation (10, 600) according to any one of the preceding claims, characterized in that the handling means (150, 610, 615, 640) include a double rail (200, 650) which is able to interact with the satellite unit (290).

10. Installation (10, 600) according to any one of the preceding claims, characterized in that the handling means (150, 610, 615, 640) include forks (205) able to transport the satellite unit (290).

11. Installation (10, 600) according to any one of the preceding claims, characterized in that, in addition to the satellite unit (290), the handling means (150, 610, 615, 640) are able to transport pallets (116), simultaneously or otherwise.

12. Installation (10, 600) according to any one of the preceding claims, characterized in that some of the containers (210) include an upper orifice (250) able to be engaged in the reception station (110b) and a lower orifice (260) able to be engaged in the feed station (110a).

13. Installation (10, 600) according to any one of the preceding claims, characterized in that some of the containers are reversible and include a single orifice able to be engaged in a reception station (110b) and in a feed station (110a).

14. Installation (10, 600) according to any one of the preceding claims, characterized in that the vertical translation device (360) of the satellite unit (290) includes:
- worm screws (340, 350) set in motion by a motor (390) and by a drive mechanism assembly (400, 410),
- a chassis (380) equipped with the said means (385, 450, 460) for gripping the container (210) and able to move vertically along the worm screws (340, 350).

15. Installation (10, 600) according to any one of the preceding claims, characterized in that the said movement means belonging to the satellite unit (290) are wheels (100) set in motion by a drive system (325) and an actuation system (330) carried on board the device (290) itself.

16. Installation (10, 600) according to any one of the preceding claims, characterized in that the satellite unit (290) includes two sets of wheels allowing it to move along two different horizontal axes (Y, Z).

17. Installation (10, 600) according to any one of the preceding claims, characterized in that the satellite unit (290) is powered by battery installed on board the satellite unit (290) itself.

18. Installation (10, 600) according to any one of claims 1 to 16, characterized in that the satellite unit (290) is powered electrically from wipers sliding along an electrical power supply rail.

## Patentansprüche

1. Anlage (10, 600) zur Übergabe von durch Schwerkraft fließenden Produkten als Teil einer Fertigungsstätte mit mehreren Stockwerken, die einerseits Orte (480) zum Bearbeiten der Produkte und andererseits technische Bereiche (470) aufweist, wobei die Anlage (10, 600) die folgenden Merkmale aufweist:
- mit mindestens einer verschließbaren Öffnung (250, 260) versehene, hermetisch dichte Behälter (210),
- Stationen (110a, b) zur Übergabe der durch Schwerkraft fließenden Produkte ohne Verschmutzung, ausgehend von einem Behälter (210) in Richtung auf einen Behandlungsort (480) (Beschickungsstation (110a)) und/oder ausgehend von einem Behandlungsort (480) in Richtung auf einen Behälter (210) (Aufnahmestation (110b)),
- mindestens ein Satellitenorgan (290) mit einem Behältnis in Form eines Parallelepipedes, das in seinem unteren und oberen Bereich und mindestens an einer seiner Seiten offen ist, wobei das Satellitenorgan (290) einen der Behälter (210) tragen und diesen heben und absenken kann, mit Hilfe einer dem Satellitenorgan (290) eigenen Einrichtung (360) zur Vertikalverschiebung derart, daß dessen Ankoppeln an die Stationen (110a, b) möglich ist, und das besagte Satellitenorgan (290) entlang mindestens einer horizontalen Achse (Y) und einer vertikalen Achse (X) mit Hilfe von Fördermitteln (150, 610, 615, 640) verschiebbar ist und eigene, mit Führungsmitteln (40) zusammenwirkende Verschiebemittel (100) aufweist derart, daß sich das Satellitenorgan (290) längs mindestens einer horizontalen Achse (Z) in einer gegenüber den Fördermitteln (150, 610, 615, 640) in einer selbständigen Weise verschieben kann, wobei die Führungsmittel (40) das Satellitenorgan (290) zwischen den Fördermitteln (150, 610, 615, 640) und den besagten Stationen (110a, b) führen können und die Gesamtheit der Fördermittel (150, 610, 615, 640), der Führungsmittel (40), des oder der Satellitenorgane (290) und der Behälter (210) in den technischen Bereichen (470) angeordnet sind,
- Mittel zur Ortsbestimmung und Positionierung der Behälter (210) und
- ein Steuersystem zum Leiten der Gesamtheit der Bewegungen der Fördermittel (150, 610, 615, 640), mindestens eines Satellitenorgans (290) und der Behälter (210).

2. Anlage (10) nach dem vorhergehenden Patentanspruch, dadurch gekennzeichnet, daß die Fördermittel mindestens eine Hebemaschine (150) mit einer vertikal verschiebbaren Gondel (180) aufweisen und das Hebemittel (150) sich längs eines Führungsorganes (25) verschieben kann.

3. Anlage (600) nach Patentanspruch 1, dadurch gekennzeichnet, daß die Fördermittel mindestens eine ortsfeste Hebemaschine (610, 615) und mehrere auf verschiedenen Stockwerken angeordnete Mittel (640) zum Horizontaltransport aufweisen.

4. Anlage (10, 600) nach irgendeinem der vorhergehenden Patentansprüche, dadurch gekennzeichnet, daß das Satallitenorgan (290) Mittel (450, 460, 385) zum Greifen der Behälter (210) aufweist und diese mit den Greifmitteln (385, 450, 460) zusammenwirkende Hängemittel (430, 440, 467, 469) aufweisen.

5. Anlage (10, 600) nach irgendeinem der vorhergehenden Patentansprüche, dadurch gekennzeichnet, daß die Beschickungsstationen (110a) in der Decke der Behandlungsorte (480) angeordnet sind.

6. Anlage (10, 600) nach irgendeinem der vorhergehenden Patentansprüche, dadurch gekennzeichnet, daß die Aufnahmestationen (110b) im Boden der Behandlungsorte (480) angeordnet sind.

7. Anlage (10, 600) nach Patentanspruch 6, dadurch gekennzeichnet, daß die Aufnahmestationen (110b) Mitnahmeeinrichtungen (530, 540) aufweisen, die mit den Aufhängeeinrichtungen (550) des Behälters (210) zusammenwirken, um diesen in seiner Lage unter den Stationen (110b) zu halten.

8. Anlage (10, 600) nach irgendeinem der vorhergehenden Patentansprüche, dadurch gekennzeichnet, daß sie auch Parkbereiche aufweist, in denen ein oder mehrere Behälter (210) in Wartestellung angeordnet sind.

9. Anlage (10, 600) nach irgendeinem der vorhergehenden Patentansprüche, dadurch gekennzeichnet, daß die Fördermittel (150, 610, 615, 640) eine mit dem Satellitenorgan (290) zusammenwirkende Doppelschiene (200, 650) aufweisen.

10. Anlage (10, 600) nach irgendeinem der vorhergehenden Patentansprüche, dadurch gekennzeichnet, daß die Fördermittel (150, 610, 615, 640) Gabeln (205) zum Transportieren des Satellitenorgans (290) aufweisen.

11. Anlage (10, 600) nach irgendeinem der vorhergehenden Patentansprüche, dadurch gekennzeichnet, daß außer dem Satellitenorgan (290) die Fördermittel (150, 610, 615, 640) in der Lage sind, gleichzeitig oder nicht, Paletten (160) zu transportieren.

12. Anlage (10, 600) nach irgendeinem der vorhergehenden Patentansprüche, dadurch gekennzeichnet, daß bestimmte Behälter (210) eine obere Öffnung (250), die in der Aufnahmestation (110b) zur Wirkung kommen kann, und eine untere Öffnung (260), die in der Beschickungsstation (110a) zur Wirkung kommen kann, aufweisen.

13. Anlage (10, 600) nach irgendeinem der vorhergehenden Patentansprüche, dadurch gekennzeichnet, daß bestimmte Behälter umsteuerbar sind und eine einzige Öffnung aufweisen, die in einer Aufnahmestation (110b) und in einer Beschickungsstation (110a) zur Wirkung kommen kann.

14. Anlage (10, 600) nach irgendeinem der vorhergehenden Patentansprüche, dadurch gekennzeichnet, daß die Anlage (360) zur Vertikalverschiebung des Satellitenorgans (290) aufweist:
- Schnecken (340, 350), die durch einen Motor (390) und eine Gruppe von Mitnehmermechanismen (400, 410) in Bewegung gesetzt werden,
- ein Chassis (380), das mit den genannten Mitteln (385, 450, 460) zum Greifen der Behälter (210) versehen ist und entlang der Schnecken (340, 350) verschoben werden kann.

15. Anlage (10, 600) nach irgendeinem der vorhergehenden Patentansprüche, dadurch gekennzeichnet, daß die eigentlichen Mittel zum Verschieben des Satellitenorgans (290) Räder (100) sind, die durch ein Mitnahmesystem (325) und ein an der Einrichtung (290) selbst getragenes Betätigungssystem (330) in Bewegung gesetzt werden.

16. Anlage (10, 600) nach irgendeinem der vorhergehenden Patentansprüche, dadurch gekennzeichnet, daß das Satellitenorgan (290) zwei Radsätze aufweist, die ihm eine Verschiebung entlang von zwei verschiedenen horizontalen Achsen (Y, Z) gestatten.

17. Anlage (10, 600) nach irgendeinem der vorhergehenden Patentansprüche, dadurch gekennzeichnet, daß das Satellitenorgan (290) durch eine auf ihm selbst angeordnete Batterie gespeist wird.

18. Anlage (10, 600) nach irgendeinem der Patentansprüche 1 bis 16, dadurch gekennzeichnet, daß das Satellitenorgan (290) elektrisch von entlang einer elektrischen Versorgungsschiene gleitenden Schleifschuhen gespeist wird.
